# EUROPEAN PATENT SPECIFICATION

(11) **EP 1 137 889 B1**
(45) Date of publication and mention of the grant of the patent: **16.10.2002**
(21) Application number: 98962014.1
(22) Date of filing: 09.12.1998
(51) Int. Cl.: F16H 7/12, F16F 13/14

(54) **HYDRAULIC DAMPING CARTRIDGE FOR A BELT TENSIONER**
HYDRAULIKDÄMPFUNGSPATRONE FÜR RIEMENSPANNVORRICHTUNG
CARTOUCHE D'AMORTISSEMENT HYDRAULIQUE POUR TENDEUR DE COURROIE

(43) Date of publication of application: 04.10.2001
(73) Proprietor: THE GOODYEAR TIRE & RUBBER COMPANY, Akron, Ohio 44316-0001 (US)
(72) Inventor: GREGG, Michael, John, William, Lincoln, NE 68502 (US)
(74) Representative: Leitz, Paul
(86) International application number: US9826104
(87) International publication number: WO00034686

(56) References cited:
- EP-A- 0 300 858
- US-A- 4 299 583
- US-A- 4 721 495
- US-A- 4 872 651
- US-A- 5 501 434
- PATENT ABSTRACTS OF JAPAN vol. 095, no. 009, 31 October 1995 (1995-10-31) & JP 07 151182 A (TOKAI RUBBER IND LTD), 13 June 1995 (1995-06-13)

## Description

### Technical Field

The present invention relates to a damping cartridge for a belt tensioner as known e.g. by US-A-4 872 651. Specifically, the present invention is a hydraulic damper cartridge that torsionally damps the movement of the tensioner lever of a lever arm type belt tensioner.

### Background Art

Lever arm type tensioners are common on automotive front-end accessory drives and cam drives. The tensioner provides a tensioning force on a belt, such as a power transmission belt. However, the tightness of the belt varies in a cyclical manner and as a function of the loads imposed upon it by both the driving pulley and the driven pulley(s). The cyclical loads cause the belt to oscillate, causing the tensioner to oscillate with the belt. Therefore, the tensioners require some form of damping of the oscillation.

Conventionally tensioners have used friction type dampers. Examples of tensioners with friction dampers include those described in US-A- 4,596,538 and 4,973,290. US-A- 5,803,850 and 5,718,649 discloses dampening means in a tensioner which employs friction padding and fluid about the friction padded surfaces. In the damping means of US-A-5,803,850 and 5,718,649, the damping fluid permits the friction pads to operate properly and does not do the actual damping of the tensioner. Tensioners with friction damping have provided adequate damping for 8 cylinder and most 6-cylinder drive systems. However, friction damping is inadequate for most 4 or fewer cylinder drives and cam drives because the individual firing pulses of four, or less, cylinders create torsional accelerations in the driving pulley, which in turn excite the accessory drive system. Additionally, friction dampers are subject to wear of the system components.

Other examples of known tensioners include those using a hydraulic pump system, as shown in US-A- 4,299,583. US-A- 5,700,213 discloses a hydraulic tensioner having a coil spring and a fluid actuated plunger for tensioning of a timing chain or belt. Such tensioners do not provide simplified damping of the oscillation of the tensioner.

US-A- 4,872,651 discloses a fluid filled resilient bushing assembly suitable for damping rotary oscillatory motions. Resilient means, which are defined by at least two spaced chambers interconnected by a restricted passageway, are interposed between an elongate outer rigid sleeve member and an elongate inner rigid member rotatable with respect to the outer sleeve member. The chambers and passageway are filled with an incompressible fluid.

The present invention addresses a need for a well-damped compact lever arm type belt tensioner. The inventive damper is a self-contained, compact passive damping unit. The damper is easy to fabricate and easy to install in a lever arm tensioner. The damper can be produced as a cartridge with its damping characteristics tailored to individual applications by adjusting the restriction geometry of the damper. Additionally, the damper can be produced in varying sizes for different size tensioners.

### Summary of the Invention

The goal of the present invention is to provide a compact damping unit for a lever arm tensioner that is easy to fabricate and install.

Another goal of the present invention is a passive, self-contained damping system for a lever arm tensioner.

The damper will damp oscillation of a first member of the tension, typically the lever arm, relative to a second member of the tensioner, typically the tensioner base. The damping characteristics of the damper can be tailored to individual applications and differing frequency ranges. The first member may also be the tensioner base and the second member may be the lever arm.

The present invention is achieved by a damper comprising fluid contained within at least two deformable chambers. Movement of a first member of the tensioner, relative to a second member of the tensioner, causes distortion of the chambers resulting in a flow of the fluid through at least one restriction in a direction opposite of the relative movement of the first and second member.

One aspect of the present invention is that damping of the oscillation can occur be either inertial damping or orifice damping of the fluid.

A further aspect of the damper is that the damper is a compact sealed housing unit.

A further aspect of the inventive damper is that the damper comprises a core, which engages with either the lever arm or the base of the tensioner. In an alternative embodiment, the core may have an eccentric configuration relative to the damper.

A further aspect of the present invention of the damper is that the restriction may be configured as either a channel or an orifice. The configuration of the restriction is dependent upon the desired damping characteristics.

### Brief Description of Drawings

The invention will be described by way of example and with reference to the accompanying drawings in which:
FIG. 1 is a lever arm belt tensioner with a section of the tensioner cut away to expose the damper;
FIG. 2 is a cross sectional view of the tensioner and damper, along line 2-2 of FIG. 1;
FIG. 3 is a sectional view of the damper;
FIG. 4 is a cross sectional view of the damper along line 4-4 of FIG. 3;
FIG. 5 is a lever arm belt tensioner with a section of the tensioner cut away to expose an alternative construction for the damper;
FIG. 6 is a cross section view of the tensioner and damper, along line 6-6 of FIG. 5;
FIG. 7 is a sectional view of the damper;
FIG. 8 is a cross sectional view of the damper along line 8-8 of FIG. 7; and
FIG. 9 is a cross sectional view of the damper along line 9-9 of FIG. 7.

### Detailed Description of the Invention

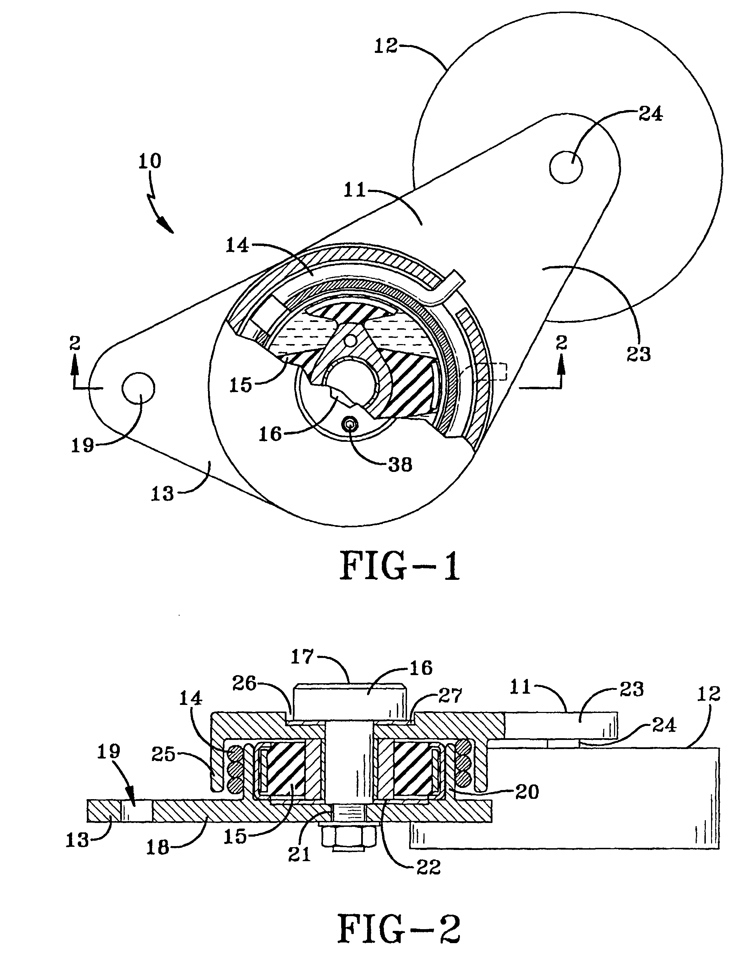

The first embodiment of the present invention is illustrated in FIGS. 1 to 4. The tensioner 10 comprises the following elements: the lever arm 11, the idler 12, the base 13, a spring 14, and a damper 15. The tensioner 10 is fitted and held together by the securing means 16, instantly illustrated as a spindle 17.

The tensioner base 13 has an extending flat base 18 provided with mounting means 19 at one end and a containment wall 20 at the opposing end. Centrally located within the containment wall 20 is a hole 21 for the securing means 16 to pass through. The spring 14 is of a diameter to fit outside of the containment wall 20, while the damper 15 is of a diameter to fit within the wall 20. Between the damper 15 and the base 13 is a washer 22.

The arm 11 is formed with an extending base 23 with mounting means 24 at one end and an extending wall 25 at the opposing end. Centrally located with the extending wall 25, but on the opposite side of the lever arm 11, is a depression 26 for the securing means 16. After the spring 14 and the damper 15 are placed onto the base 13, the arm 11 is placed over the base 13. A second washer 27 may be placed in the depression 26 prior to attachment of the securing means 16.

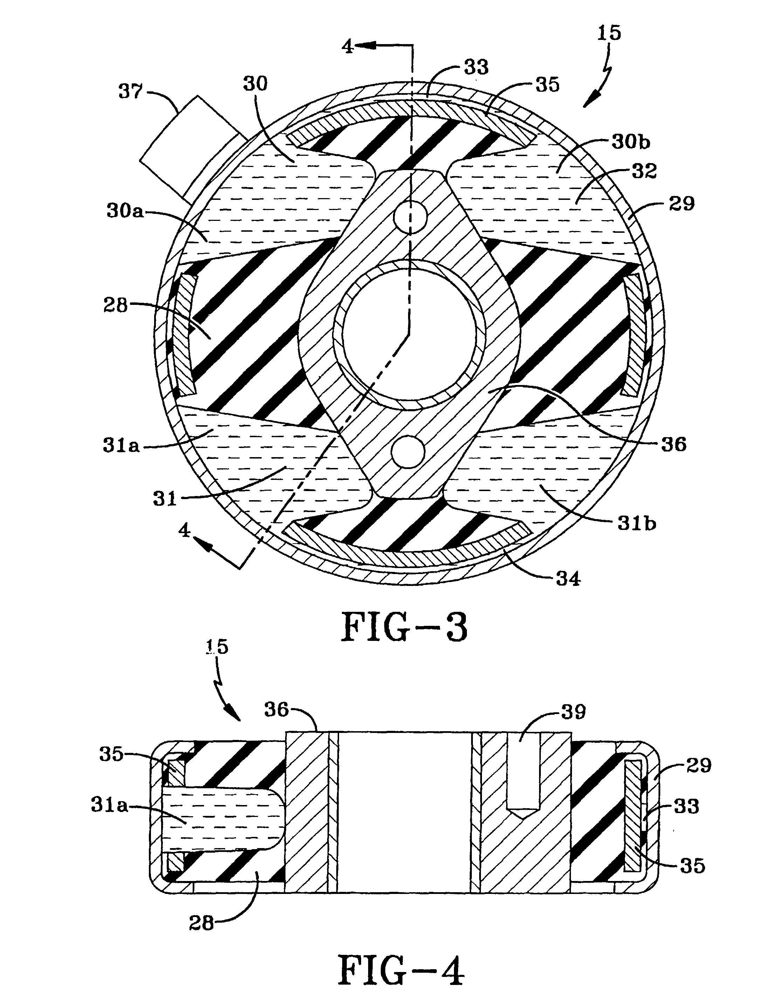

Greater detail of the inventive damper 15 can be seen in FIGS. 3 and 4. The damper 15 is a substantially cylindrical unitary body 28 encased within, but not bonded to a metal ring 29. The body 28 is a deformable elastomeric body configured to form two separate fluid cavities 30, 31, each cavity 30, 31 containing damping fluid 32. Each cavity 30, 31 is subdivided into two chambers 30a, 30b, 31a, 31b. The chambers 30a, 30b, 31a, 31b of each cavity 30, 31 are connected by restrictions 33, 34 creating a column of damping fluid 32.

The configuration of the restrictions can be damping channels, as illustrated, or simple orifices. The illustrated channels 33, 34 may vary in length and cross-sectional configuration in order to varying the damping characteristics of the damper 15. For optimum damping performance over two widely spaced frequencies the configuration of each channel 33, 34 within a damper 15 should be different with each channel 33, 34 being tuned for a particular frequency. Conversely, if only one frequency range needs the high damping force, then both channels 33, 34 are configured identically and tuned for the required frequency. FIG. 4 illustrates a single rectangular cross-sectional configuration for the damping channels 33, 34, however, each cavity 30, 31 may have multiple damping channels. The action of the fluid can be either inertial damping, due to the inertial of the fluid within the channel as it oscillates between the chambers or orifice damping due to the hydrodynamic friction of the column of fluid passing through the channel.

Each chamber 30a, 30b, 31a, 31b is configured to be as wide as possible to maximize the volume of fluid 32 displaced. Additionally, the chamber side walls need to be thick enough to withstand the fluid pumping pressures generated transferring fluid through the damping channels 33,34 to or from the other chamber 30a, 30b, 31a, 31b.

Providing structural integrity to the damper 15, within the damper body 28 is the intermediate metal 35. The intermediate metal 35 is also ring shaped, but with discontinuities, i.e. windows, at each fluid chamber 30,31, as seen in FIG. 4. The intermediate metal 35 is thick enough to withstand distortion under sealing pressures when the damper 15 is assembled and swaged. At the center of the body 29 is an inner metal core 36. The core 36 is bonded to the elastomer of the body 28. The core 36 extends the full depth of the damper 15, and may protrude above the plane of the upper surface of the damper 15 as instantly illustrated. For ease of assembly, the damper 15 may be provided with a location tab 37.

When the tensioner 10 is assembled, the core 36 is attached to the lever arm 11, by means of conventional attachment means 38 (see FIG. 1) within the provided means 39, so that the core 36 rotates with the lever arm 11. Because of the bonding of the body core 36 with the body 28, when the core 36 rotates, the body 28 also rotates. As the body 28 rotates, and the cavities 30, 31 are deformed, fluid 32 is displaced from the chambers 30a, 30b, 31a, 31b in the direction of the rotational movement. The fluid 32 travels through the damping channels 33, 34 away from the direction of motion. This fluid movement provides the damping for the lever arm tensioner 10. As noted above, the damping channels 33, 34 may be sized to provide additional inertial damping at critical frequencies. Damping decoupling is also possible for small movements, by placing a decoupling valve in the core 36 between the opposing fluid chambers.

The metal ring 29, which encases the body 28 and the damping fluid 32 within, as described herein, is located in the base 13 by the location tab 37 or similar mechanical devices. Since the ring 29 is not bonded to the body 28, the ring 29 does not rotate with the body 28 when the tensioner 10 is subject to oscillations. As an alternative, the core 36 may be static and the outer metal ring 29 is attached to the arm 11, permitting the ring 29 to rotate.

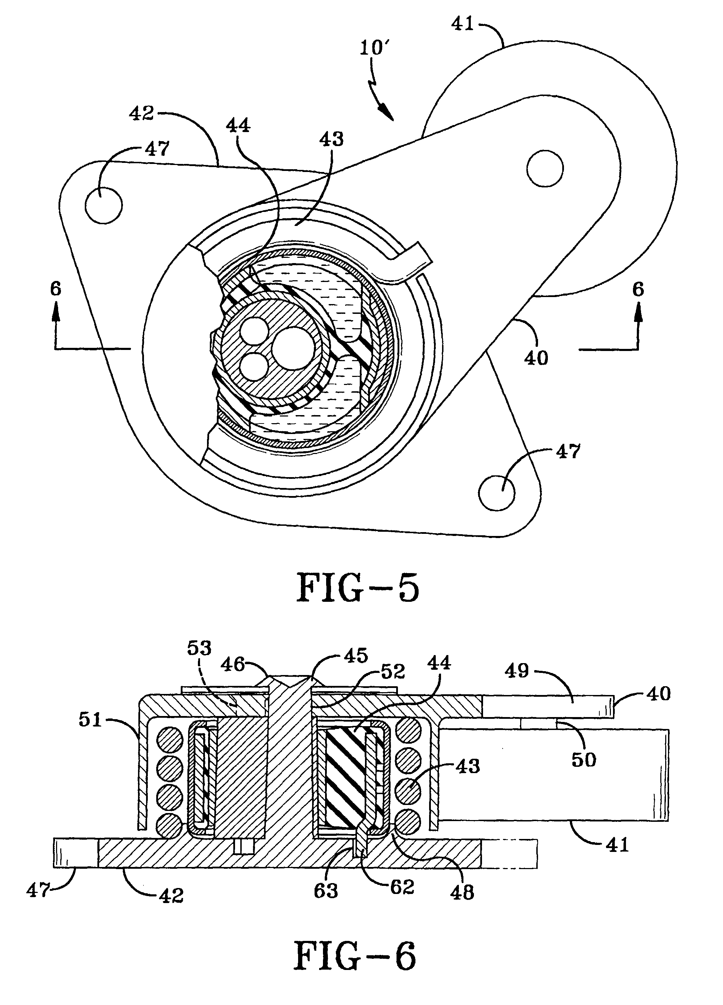

FIGS. 5 to 7 illustrate an alternative configuration for the inventive damper. The alternative configuration permits an increase in the amount of fluid displaced for a given arm tensioner angle and reduces the rubber strain within the body of the damper.

The overall configuration, as illustrated in FIGS. 5 and 6, of the tensioner 10' is similar to the tensioner 10 of the first embodiment. The tensioner 10' is comprised of the primary elements: lever arm 40, an idler 41, a base 42, a spring 43, and a damper body 44. The tensioner 10' is fitted and held together by the securing means 45, instantly illustrated as a rivet 46.

The tensioner base 42 has a symmetrical configuration with mounting means 47 at each end and a low containment wall 48. Centrally located within the containment wall 48 is the securing rivet 46 that passes through the damper 44 and the lever arm 40 when the tensioner 10' is assembled. The spring 43 is of a diameter to fit outside the containment wall 48, while the damper 44 is of a diameter to fit within the wall 48.

The arm 40 is formed with an extending base 49 with mounting means 50 at one end and an extending wall 51 at the opposing end. Centrally located within the extending wall 51 is means 52 for securing the base 42 to the arm 40 and means 53 for securing the damper 44 to the arm 40. After the spring 43 and the damper 44 are placed onto the base 42, the arm 40 is placed over the base 42. The rivet 46 is then crimped down to secure the unit 10'. While the first embodiment employs a threaded means 17 to assemble the tensioner 10 and a rivet 46 is illustrated in connection with the second embodiment of the tensioner 10', one skilled in the art would readily appreciate that the securing means 16, 45 are interchangeable for either tensioner alternative, as well as other conventional securing means.

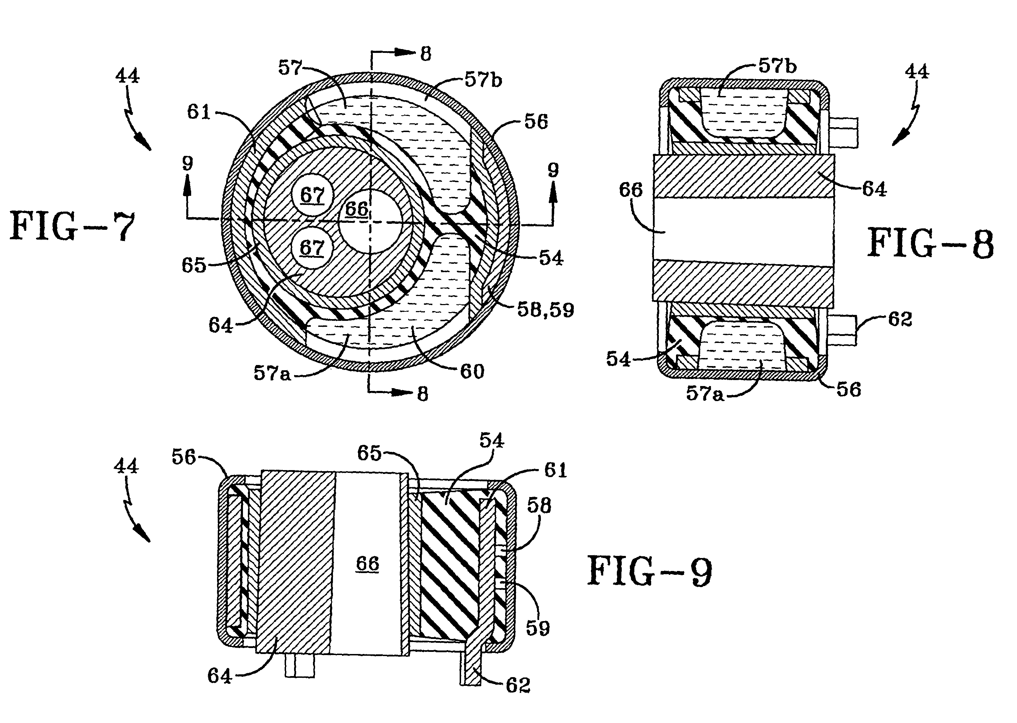

Greater detail of the damper 44 can be seen in FIGS. 7 to 9. The damper 44 is again a substantially cylindrical unitary body 54 encased within a metal ring 56. The body 54 is an elastomeric body configured with a single fluid cavity 57. The cavity 57 is divided into two chambers 57a, 57b which are connected by damping channels 58, 59. The cavity 57 contains damping fluid 60. The cross sectional configuration of each chamber 57a, 57b is again as large as possible within the same constraints as applied in the first embodiment.

The damping channels 58, 59 are also configured in the same manner as the channels 33, 34 of the first embodiment in order to vary the damping characteristics of the damper 44. FIG. 9 illustrates a rectangular cross-sectional configuration for the damping channels 58, 59; however, the fluid cavity 57 may have more or less damping channels than that illustrated.

Again providing structural integrity to the damper 44, within the damper body 54 is the intermediate metal 61. The intermediate metal ring 61 is approximately cylindrical with discontinuities, i.e. windows, at each fluid chamber 57a, 57b, as seen in FIG. 7. At opposing locations on the intermediate metal ring 61, extending tangs 62 are provided for ease of proper location of the damper 44 inside the tensioner 10'. When the damper 44 is placed onto the base 42, the tangs 62 fit into slots 63 (see FIG. 6). The tangs 62 also secure the damper 44 to prevent movement of the damper 44 when the tensioner 10' is in use. The tangs 62 may be bent, peened or riveted to attach the damper 44 to the base 42.

Within the body 54 is an eccentric rubber core 64 and an inner metal ring 65. The eccentric 64 is instantly defined by a central hole 66 and at least one adjacent mounting holes 67. The central hole 66 is offset relative to the eccentric core 64, but centrally located relative the damper 44. The eccentric 64 rotates around an axis in the center of the damper 44, this axis being the same as the tensioner arm pivot axis. The central hole 66 is illustrated as tapered but could be straight as could the eccentric's outside diameter. Tapering the center hole 66 provides a means for taking up the wear in the bushings by moving the components axially. The mounting holes 67 cooperate with securing means 53 for securing the eccentric 64 to the tensioner arm 40. The mounting holes 67 are also illustrated as tapered to allow the tensioner arm 40 to be bolted to the eccentric 64. The inner metal ring 65 diameter corresponds to the outside diameter of the eccentric 64. The inner metal *65* and the outside of the eccentric 64 may be tapered, as illustrated, to compensate for wear of the inner metal 65 and the eccentric 64.

The body 54 is bonded to the intermediate metal 56 and the inner metal 65. When the damper 44 is assembled, the eccentric 64 is free to rotate within the inner metal 65. When in operation, as the eccentric 64 rotates, the inner metal 65 is displaced upwards. The movement of the eccentric 64, in combination with the lever arm 40, forces the fluid 60 through the channels 58, 59, creating hydraulic damping of the vibrations imposed on the tensioner 10'.

For both embodiments, the following materials of construction are applicable. The dampening fluid may be any conventional damping fluid that is compatible with the body rubber, such as ethylene glycol, silicon fluid, silicon oil, or phosphate esters. Due to the operating conditions imposed upon the damper, the fluid should be stable over the temperature range of -40° F to 300°F. The body rubber may be any conventional elastomer such as EPDM, polyurethane, or hard material such as reinforced nylon. The rubber must be able to bond to the rigid or metal parts of the damper and must be able to withstand the flexing imposed upon the damper. The intermediate and outer rings are metal such as steel; however, other conventional rigid materials may be used, such as thermo-resins, so long as the material can bond with other parts of the damper as required.

Variations in the present invention are possible in light of the description provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A damper (15, 44) for damping oscillation, over a frequency range, of a first member movable relative to a second member, the damper (15, 44) comprising at least two deformable chambers (30a, 30b, 31a, 31b, 57a, 57b) formed within an elastomeric body (28, 54), and fluid (32, 60) contained within the at least two deformable chambers (30a, 30b, 31a, 31b, 57a, 57b), wherein movement of the first member relative to the second member causes distortion of the chambers (30a, 30b, 31a, 31b, 57a, 57b) resulting in a flow of the fluid (32,60) through at least one restriction (33, 34, 58, 59) in a direction opposite of the relative movement of the first and second member, the damper (15, 44) being **characterized by**:
the elastomeric body (28, 54) being non-fixedly secured within an outer ring (29, 56).

2. A damper (44) in accordance with claim 1 wherein the damper comprises a core (64) within the elastomeric body (54), the damper (44) being further **characterized by** the core (64) being eccentrically located within the damper (44).

## Patentansprüche

1. Dämpfer (15, 44) zur Schwingungsdämpfung über einen Frequenzbereich eines relativ zu einem zweiten Element bewegbaren ersten Elementes, wobei der Dämpfer (15, 44) mindestens zwei in einem elastomeren Körper (28, 54) ausgebildete verformbare Kammern (30a, 30b, 31a, 31b, 57a, 57b) und ein in den mindestens zwei verformbaren Kammern (30a, 30b, 31a, 31b, 57a, 57b) enthaltenes Fluid (32, 60) umfasst, wobei eine Bewegung des ersten Elementes relativ zum zweiten Element eine Verformung der Kammern (30a, 30b, 31a, 31b, 57a, 57b) verursacht, die ein Fließen des Fluides (32, 60) durch mindestens eine Verengung (33, 34, 58, 59) in einer zur Relativbewegung des ersten und des zweiten Elementes entgegengesetzten Richtung ergibt, wobei der Dämpfer (15, 44) **dadurch gekennzeichnet ist:**
**dass** der elastomere Körper (28, 54) nicht festgelegt innerhalb eines Außenringes (29, 56) gesichert ist.

2. Dämpfer (44) nach Anspruch 1, wobei der Dämpfer einen Kern (64) innerhalb eines elastomeren Körpers (54) umfasst und der Dämpfer (44) weiter **dadurch gekennzeichnet ist, dass** der Kern (64) in dem Dämpfer (44) exzentrisch angeordnet ist.

## Revendications

1. Dispositif d'amortissement (15, 44) pour amortir les oscillations, sur une gamme de fréquences, d'un premier élément mobile par rapport à un deuxième élément, le dispositif d'amortissement (15, 44) comprenant au moins deux chambres déformables (30a, 30b, 31a, 31b, 57a, 57b) formées à l'intérieur d'un corps élastomère (28, 54) et un fluide 3260 contenus à l'intérieur desdites chambres déformables (30a, 30b, 31a, 31b, 57a, 57b) au moins au nombre de deux, dans lequel le mouvement du premier élément par rapport au deuxième élément provoque une distorsion des chambres (30a, 30b, 31a, 31b, 57a, 57b) donnant lieu à un écoulement du fluide (32, 60) à travers au moins une restriction (33, 34, 58, 59) dans la direction opposée à celle du mouvement relatif des premier et deuxième éléments, le dispositif d'amortissement (15, 44) étant **caractérisé par le fait que** :
le corps élastomère (28, 54) est fixé de manière amovible à l'intérieur d'un anneau externe (29, 56).

2. Dispositif d'amortissement (44) selon la revendication 1, dans lequel le dispositif d'amortissement comprend une partie centrale (64) à l'intérieur du corps élastomère (54), le dispositif d'amortissement (44) étant en outre **caractérisé par le fait que** la partie centrale (64) est disposée en position excentrique à l'intérieur du dispositif d'amortissement (44).
